# EUROPÄISCHE PATENTSCHRIFT

(11) **EP 4 139 082 B1**
(45) Veröffentlichungstag und Bekanntmachung des Hinweises auf die Patenterteilung: **21.02.2024**
(21) Anmeldenummer: 21721073.1
(22) Anmeldetag: 22.04.2021
(51) Int. Cl.: B23P 19/06, B25B 21/00, B25B 27/16, B25B 29/02, G01B 5/14, G01B 11/14, F03D 13/10, F03D 13/20, F03D 80/50

(54) **VERFAHREN ZUR INSTALLATION UND/ODER WARTUNG EINER FLANSCHVERBINDUNG SOWIE WERKZEUG UND VERWENDUNG**
METHOD FOR INSTALLING AND/OR MAINTAINING A FLANGE CONNECTION, AND TOOL AND USE
PROCÉDÉ POUR INSTALLER ET/OU ENTRETENIR UN RACCORDEMENT À BRIDE, OUTIL ET UTILISATION

(30) Priorität: 22.04.2020 DE 102020110895
(43) Veröffentlichungstag der Anmeldung: 01.03.2023
(73) Patentinhaber: Schaaf GmbH & Co. KG, 41812 Erkelenz (DE)
(72) Erfinder: KÖLLGES, Ralf, 41812 Erkelenz (DE)
(74) Vertreter: Geskes, Christoph
(86) Internationale Anmeldenummer: PCT/EP2021/060583
(87) Internationale Veröffentlichungsnummer: WO 2021/214251

(56) Entgegenhaltungen:
- EP-A1- 3 566 815
- EP-A1- 3 593 939
- EP-A1- 3 597 369
- EP-B1- 3 597 369
- WO-A1-2018/010744
- DE-A1-102008 016 925
- KR-A- 20130 026 039

## Beschreibung

Die Erfindung betrifft ein Verfahren zur Installation und/oder Wartung einer Flanschverbindung sowie ein Manuell bewegbares Werkzeug zur Installation und/oder Wartung einer Flanschverbindung und eine Verwendung des Werkzeuges.

Verfahren zur Installation von Flanschverbindungen sind allgemein bekannt. So geht aus EP 3 593 939 A1 ein Verfahren zur Verschraubung einer Flanschverbindung hervor, bei dem mittels eines Spaltmessgerätes zumindest eine Vielzahl von den Bolzensystemen zuordenbaren Spaltmaßen zwischen dem ersten Flansch uns dem zweiten Flansch gemessen wird, wobei die einzelnen gemessenen Spaltmaße auswertbar und den einzelnen Bolzensystemen zuordenbar gespeichert werden, wobei mittels eines Anziehmittels die Bolzensysteme in einer Reihenfolge in Abhängigkeit der diesen zugeordneten Spaltmaße angezogen werden. Nachteilig bei diesem bekannten Verfahren ist, dass die Vielzahl von Schraubenverbindungen, die beispielsweise an Flanschen einer Windkraftanlage angezogen werden müssen, der Monteur den Überblick verlieren kann, welche Schraube bereits angezogen ist und welche noch anzuziehen ist.

WO 2018/010744 A1 offenbart ein Verfahren zum Steuern des Betriebs eines Elektrowerkzeugsystems für die Montage einer Windenergieanlage, bei dem Schraubenverbindungen aus Bolzen und Muttern mit Hilfe eines manuell bewegbaren Werkzeugs in Gestalt eines Bolzenspannwerkzeugs festgezogen werden. Das Bolzenspannwerkzeug umfasst eine Spannvorrichtung. Das Freigeben des Bolzenspannwerkzeugs erfolgt mittels eines Steuerungsmittels, falls ein Bolzen mit Hilfe eines Barcodes oder eines RFID-Etiketts eindeutig erkannt wurde. Die WO 2018/010744 offenbart ein Verfahren gemäß dem Oberbegriff des Anspruchs 1.Sie offenbart ebenfalls ein manuell bewegbares Werkzeug zur Installation und/oder Wartung einer Flanschverbindung, die eine Mehrzahl von Schraubenverbindungen umfasst, zumindest umfassend
- ein Schraubenspannmittel,
- eine Recheneinheit und - einen Schraubenidentifizierungssensor, wobei
- mittels des Schraubenidentifizierungssensors die Schraubenverbindungen der Flanschverbindung identifizierbar sind,
- mittels der Recheneinheit eine Bedienung des Schraubenspannmittels nur dann freigebbar ist, wenn mittels des Schraubenidentifizierungssensors die Position des Werkzeuges über der von einer Recheneinheit vorgegebenen Schraubenverbindung erkennbar ist.

DE 10 2008 016925 A1 offenbart ein Verfahren zum Aufbauen einer Windenergieanlage, bei dem Befestigungsmittel aus Schrauben und Schraubenmuttern mit Hilfe eines Prüfgeräts festgezogen werden, wobei das Festziehen jedes Befestigungsmittels unter Berücksichtigung einer jeweils zugeordneten Kennung überprüft wird. Das Prüfgerät umfasst einen Werkzeugabschnitt zum Festziehen der Befestigungsmittel, eine Erfassungseinheit zum Erfassen der Kennungen sowie eine Datenverarbeitungseinrichtung zum Verarbeiten der Daten der Befestigungsmittel.

EP 3 597 369 A1 offenbart ein Verfahren zum dokumentierten Anziehen oder Nachziehen einer Schraubverbindung aus einem Gewindebolzen und einer darauf aufgeschraubten, auf einer Flanschfläche abgestützten Mutter, sowie eine Schraubenspannvorrichtung. Die Schraubenspannvorrichtung umfasst einen gegen die Flanschfläche abgestützten Spannzylinder mit einer Wechselbuchse und einer durch einen Elektromotor angetriebenen Drehhülse, eine Prozesssteuereinheit mit einem Dokumentationsmodul, einen Handschalter, eine an dem Spannzylinder angeordnete Erfassungseinrichtung sowie einen an dem Spannzylinder angeordneten Abstandssensor. Bei dem Verfahren wird auf das freie Gewindeende des Gewindebolzens die Wechselbuchse aufgeschraubt, wird die Wechselbuchse unter Längsdehnung des Gewindebolzens hydraulisch angezogen und wird währenddessen die Mutter durch Drehen der drehfest mit ihr verbundenen Drehhülse beigedreht. Der Handschalter ermöglichen in einer ersten Betriebsart nur einen elektrischen Antrieb der Wechselbuchse und in einer zweiten Betriebsart nur einen elektrischen Antrieb der Drehhülse. Unter Einsatz der Prozesssteuereinheit wird die Schraubverbindung mittels der Erfassungseinrichtung identifiziert, und es wird ein die einzelne Schraubverbindung kennzeichnendes Identitätsmerkmal in dem Dokumentationsmodul gespeichert. Nach dem Aufsetzen des Spannzylinders auf die Schraubverbindung wird mittels des Abstandssensors ein Abstand A zu der Flanschfläche erfasst, und es wird der Prozesssteuereinheit ein entsprechendes erstes Abstandssignal übermittelt. Sodann wird, in der ersten Betriebsart, die Wechselbuchse auf das freie Gewindeende aufgeschraubt und mittels des Abstandssensors erneut der Abstand A zu der Flanschfläche erfasst, und es wird der Prozesssteuereinheit ein entsprechendes zweites Abstandssignal übermittelt. Die Prozesssteuereinheit ermittelt aus der Differenz der Abstandssignale die Größe des Gewindeeingriffs zwischen der Wechselbuchse und dem freien Gewindeende, und die Prozesssteuereinheit gibt nur bei Vorliegen eines vorgegebenen Mindestgewindeeingriffs ein Umschalten in die zweite Betriebsart frei. Nach dem Umschalten in die zweite Betriebsart mittels des Handschalters wird der Gewindebolzen längsgedehnt, und es wird ein für die an der Wechselbuchse wirkende Zugkraft und/oder den aufgewendeten hydraulischen Druck charakteristischer Lastwert in dem Dokumentationsmodul gespeichert und dem jeweiligen Identitätsmerkmal zugewiesen.

KR 10 2013 0026039 A offenbart einen Wartungsroboter für einen Windkraftgenerator, der in der Lage ist, ein Verfahren zur automatischen Befestigung, Prüfung und Markierung von Schraubverbindungen aus Bolzen und Muttern durchzuführen, die mit der Flanscheinheit eines Turmsegments verbunden sind. Der Wartungsroboter umfasst einen Roboterkörper, eine Antriebseinheit, einen ersten Arm und einen zweiten Arm. Die Antriebseinheit bewegt den Roboterkörper entlang der Seite der Flanscheinheit. Der erste Arm erstreckt sich in eine erste Richtung vom Roboterkörper aus und ist mit einer Mutterbefestigungseinheit ausgestattet. Der zweite Arm erstreckt sich in eine zweite Richtung vom Roboterkörper aus und ist mit einer Schraubenbefestigungseinheit ausgestattet.

EP 3 566 815 A1 offenbart ein Verfahren zum Verspannen von Befestigungsmitteln, die Bolzensysteme aus Bolzen und Muttern sowie eine Aufnahmevorrichtung aus zwei Flanschen mit Flanschausnehmungen umfassen, mittels einer Befestigungsanordnung. Die Befestigungsanordnung umfasst eine Spannvorrichtung und eine Verdrehsicherung, die einen oberen Endbereich und einen unteren Endbereich aufweist. Der obere Endbereich ist derart ausgebildet, dass die Verdrehsicherung mittels der Spannvorrichtung rotatorisch fixierbar ist. Der untere Endbereich ist derart ausgebildet, dass der Bolzen rotatorisch fixierbar ist. Das Verfahren umfasst die Schritte: a) Einbringen des Bolzens in eine Flanschausnehmung der Aufnahmevorrichtung; b) Montieren der Spannvorrichtung auf einer Mutterseite der Aufnahmevorrichtung; c) Anordnen der Verdrehsicherung in der Spannvorrichtung, so dass die Verdrehsicherung rotatorisch fixiert wird; d) Anordnen der Verdrehsicherung am Bolzen, so dass der Bolzen rotatorisch fixiert wird; und e) Verspannen der Befestigungsmittel mittels der Spannvorrichtung.

Die Aufgabe der Erfindung ist daher, ein Verfahren, ein Werkzeug und eine Verwendung bereit zu stellen, die die aus dem Stand der Technik bekannten Verfahren und Werkzeuge verbessert. Bevorzugt ist die Aufgabe ein Verfahren und ein Werkzeug bereit zu stellen, mit der eine Flanschverbindung sicher und bevorzugt Fehlerfrei verschraubbar ist.

Die Aufgabe wird erfindungsgemäß gelöst mittels eines Verfahrens zur Installation und/oder Wartung einer Flanschverbindung, die eine Mehrzahl von Schraubenverbindungen umfasst, mit einem manuell bewegbaren Werkzeug zumindest umfassend ein Schraubenspannmittel, eine Recheneinheit und einen Schraubenidentifizierungssensor, wobei die Schritte ausgeführt werden:
- Zuordnen einer eineindeutigen Identifizierung zu jeder Schraubenverbindung der Flanschverbindung,
- Ermitteln einer zu spannenden Schraubenverbindung,
- Positionieren des Werkzeuges auf der zu spannenden Schraubenverbindung,
- Identifizierung der Schraubenverbindung mittels des Schraubenidentifizierungssensors,
- Freigeben des Schraubenspannmittels mittels der Recheneinheit,
- Spannen der Schraubenverbindung mittels des Schraubenspannmittels.
   wobei
- geprüft wird, ob das Werkzeug oder das Schraubenspannmittel korrekt an der Schraubenverbindung angesetzt ist; und
- das Freigeben des Schraubenspannmittels erfolgt, wenn das Ergebnis dieser Prüfung positiv ist, und/oder das Schraubenspannmittel gesperrt oder angehalten wird, wenn das Ergebnis dieser Prüfung negativ oder nicht positiv ist.

Weiterhin wird die Aufgabe erfindungsgemäß gelöst mittels eines manuell bewegbaren Werkzeugs zur Installation und/oder Wartung einer Flanschverbindung, die eine Mehrzahl von Schraubenverbindungen umfasst, zumindest umfassend
- ein Schraubenspannmittel,
- eine Recheneinheit,
- einen Schraubenidentifizierungssensor, und
- einen Sensor, der dazu ausgebildet ist, einen Abstand zwischen der Schraubenverbindung und dem Werkzeug und/oder einen Abstand zwischen der Schraubenverbindung und dem Schraubenspannmittel zu erfassen,
   wobei
- mittels des Schraubenidentifizierungssensors die Schraubenverbindungen der Flanschverbindung identifizierbar sind,
- mittels der Recheneinheit eine Bedienung des Schraubenspannmittels nur dann freigebbar ist, wenn mittels des Schraubenidentifizierungssensors die Position des Werkzeuges über der von einer Recheneinheit vorgegebenen Schraubenverbindung erkennbar ist;
- mittels des Sensors und der Recheneinheit prüfbar ist, ob das Werkzeug oder das Schraubenspannmittel korrekt an der Schraubenverbindung angesetzt ist; und
- mittels der Recheneinheit das Schraubenspannmittel freigebbar ist, wenn das Ergebnis dieser Prüfung positiv ist, und/oder das Schraubenspannmittel gesperrt oder angehalten werden kann, wenn das Ergebnis dieser Prüfung negativ oder nicht positiv ist. Weiterhin wird die Aufgabe erfindungsgemäß gelöst mittels einer Verwendung des vorgeschlagenen manuell bewegbaren Werkzeugs in dem vorgeschlagenen Verfahren zur Installation und/oder Wartung einer Flanschverbindung.

Es wird ein Verfahren zur Installation und/oder Wartung einer Flanschverbindung vorgeschlagen. Die Flanschverbindung umfasst eine Mehrzahl von Schraubenverbindungen. Unter anderem mit einem manuell bewegbaren Werkzeug zumindest umfassend ein Schraubenspannmittel, eine Recheneinheit und einen Schraubenidentifizierungssensor werden die Schritte ausgeführt:
- Zuordnen einer eineindeutigen Identifizierung zu jeder Schraubenverbindung der Flanschverbindung,
- Ermitteln einer zu spannenden Schraubenverbindung,
- Positionieren des Werkzeuges auf der zu spannenden Schraubenverbindung,
- Identifizierung der Schraubenverbindung mittels des Schraubenidentifizierungssensors,
- Freigeben des Schraubenspannmittels mittels der Recheneinheit,
- Spannen der Schraubenverbindung mittels des Schraubenspannmittels.

Bevorzugt wird kontrolliert und weiter bevorzugt dokumentiert, dass alle prozessrelevanten Schritte an der jeweiligen bevorzugt von einem Schraubenidentifizierungsmittel ermittelten Schraubenverbindung ausgeführt wurden.

In einer vorteilhaften Ausgestaltung ist vorgesehen, dass die Schraubenverbindungen in der Flanschverbindung vorinstalliert werden. Bevorzugt werden die Schraubenverbindungen von Hand eingesetzt und verschraubt. Beispielsweise werden die Schraubenverbindungen insbesondere bei einer Vorinstallation von Hand oder mit einem Schlagschrauber verschraubt. In einer Ausgestaltung ist vorgesehen, dass die Schraubenverbindung bei der Vorinstallation mit bis zu etwa 1000 Nm angezogen werden. In einer weiteren Ausgestaltung, insbesondere wenn das Verfahren für eine Wartung einer Flanschverbindung verwendet wird, sind die Schraubenverbindungen bereits mittels eines Schraubenspannmittels, bevorzugt hydraulisch verspannt.

Schraubverbindungen umfassen bevorzugt zumindest einen Bolzen, eine Mutter und ein Widerlager. Das Widerlager weist in einer Ausführungsform einen Schraubenkopf auf, der bevorzugt unmittelbar mit einem Bolzenmaterial verbunden ist. In einer weiteren Ausführungsform weist das Widerlager zumindest eine Gegenmutter auf. Weiterhin kann die Schraubenverbindung in einer Ausführungsform zumindest eine, bevorzugt zwei Unterlegscheiben aufweisen. In einer Ausgestaltung ist vorgesehen, dass die Mutter ein Mutterinnengewinde aufweist, das dem Außengewinde eines vorgespannten Bolzens entspricht. Weiter bevorzugt ist eine Auflagefläche der Mutter derart gestaltet, dass keine Unterlegscheibe mit dieser verwendet werden muss. Bevorzugt weist die Mutter eine ebene Auflagefläche auf, die weiter bevorzugt rechtwinklig zu einer Gewindeachse der Mutter ausgebildet ist. Ist das Widerlager als Gegenmutter gestaltet, gelten die obigen Ausführungen zur Mutter ebenfalls für die Gegenmutter des Widerlagers. Der Bolzen ist bevorzugt ein Gewindebolzen, dessen Außengewinde mit dem Innengewinde der Mutter und ggf. der Gegenmutter korrespondiert oder dessen Geometrie des Außengewindes, bevorzugt bei Aufbringung einer Maximalkraft auf den Bolzen, mit dem Mutterinnengewinde und ggf. dem Gegenmutterinnengewinde korrespondiert. In einer Ausgestaltung ist die Schraubenverbindung eine HV-Schraubengarnitur.

Die Flanschverbindung weist zumindest einen ersten Flansch mit zumindest einer ersten Flanschausnehmung und einen zweiten Flansch mit zumindest einer zweiten Flanschausnehmung auf. Bevorzugt weist der Flansch eine Vielzahl von Flanschausnehmungen auf, in die eine Mehrzahl von Schraubenverbindungen einbringbar ist. Die Flanschausnehmungen des ersten Flansches und des zweiten Flansches werden bevorzugt fluchtend zueinander ausgerichtet, so dass die Schraubenverbindung in diese gesteckt werden können.

Bei der Installation großer Flansche, wie sie bei beispielsweise Windkraftanlagen oder Kranen vorkommen, sind sehr viele Schraubenverbindung von einem oder mehreren Monteuren anzuziehen. Zur Wahrung der Sicherheit werden die Schrauben in einer vorgegebenen Spannsequenz gespannt. Monteure können bei der großen Anzahl von Schraubenverbindung den Überblick verlieren, welche Schraubenverbindung gespannt wurde und welche noch nicht. Weiterhin kann die Spannsequenz, nicht unmittelbar für den Monteur ersichtlich sein, wenn beispielsweise eine Spannsequenz von Spaltmaßen der Flanschverbindung abhängig ist. Das vorgeschlagene Verfahren und das Werkzeug haben den Vorteil, dass der Monteur jede Schraubenverbindung in der Reihenfolge der Spannverbindung spannen beziehungsweise warten muss, da bevorzugt ansonsten das Werkzeug nicht bedienbar ist. Weiterhin wird durch das Vorgeschlagene Verfahren und Werkzeug eine Dokumentation des Spannens der Schraubenverbindung an der Flanschverbindung wesentlich vereinfacht.

Das Verfahren ist unter anderem mit einem manuell bewegbaren Werkzeug ausführbar. Das Werkzeug umfasst ein Schraubenspannmittel. Das Schraubenspannmittel kann beispielsweise als Drehmomentschlüssel, elektrischer Drehmomentschrauber, hydraulischer Drehmomentschrauber, pneumatischer Drehmomentschrauber oder Schraubenspannvorrichtung ausgestaltet sein. Bevorzugt kann ein Schraubenspannmittel, das als Schraubenspannvorrichtung ausgestaltet ist, bevorzugt hydraulisch eine Vorspannung in der Schraubenverbindung erzeugen. Das Schraubenspannmittel wird in einer Ausgestaltung von dem Monteur bedient.

Das Werkzeug umfasst eine Recheneinheit. Mittels der Recheneinheit kann in einer Ausgestaltung das Schraubenspannmittel angesteuert werden. So ist in einer Ausgestaltung vorgesehen, dass die Recheneinheit das Schraubenspannmittel sperren und/oder freigeben kann. In einer Ausgestaltung ist vorgesehen, dass eine Funktion des Werkzeuges gesperrt wird, wenn eine falsche Positionierung erkannt wird. Beispielsweise kann derart eine Bedienung des Schraubenspannmittels, bevorzugt durch die Recheneinheit blockiert und/oder freigegeben werden.

In einerweiteren vorteilhaften Ausgestaltung ist vorgesehen, dass mittels der Recheneinheit beispielsweise eine Kraft, ein Druck und/oder andere Parameter vorgegeben werden können, mittels der das Schraubenspannmittel die Schraubenverbindungen vorspannt.

Das Werkzeug umfasst einen Schraubenidentifizierungssensor. Mit dem Schraubenidentifizierungssensor kann in einer Ausgestaltung eine Identifizierung, die einer Schraubenverbindung zugeordnet ist, ausgelesen werden.

Zur Ausführung des Verfahrens ist in einer bevorzugten Ausgestaltung vorgesehen, dass die Schraubenverbindungen mittels Identifizierungsmittel eineindeutig gekennzeichnet werden. Bevorzugt werden die Schraubenverbindungen in der Flanschverbindung eineindeutig gekennzeichnet, so dass jede Schraubenverbindung in der Flanschverbindung eindeutig identifiziert werden kann. Beispielsweise können die Schrauben Identifizierungsmittel aufweisen, die die jeweilige Schraube identifiziert. In einer weiteren Ausführungsform ist vorgesehen, dass die Flanschausnehmungen, bevorzugt die fluchtend zueinander ausgerichteten Paare von Flanschausnehmungen des ersten Flansches und des zweiten Flansches, mit Identifizierungsmitteln versehen werden. Bevorzugt kann die Identifizierung in dieser Ausgestaltung bestehen bleiben, selbst wenn eine Schraubenverbindung einer Flanschausnehmung ausgetauscht wird. Die neue Schraubenverbindung erhält somit bei Austausch das Identifizierungsmittel der vorhergehenden Schraubenverbindung. In einer weiteren Ausgestaltung wird gegebenenfalls das Identifizierungsmittel mit der Schraubenverbindung ausgetauscht.

In einer bevorzugten Ausgestaltung ist vorgesehen, dass als Identifizierungsmittel funkauslesbare Chips, optische Codes und/oder absolute oder relative Positionen an der Flanschverbindung verwendet werden. Beispielsweise können Aufkleber oder Aufdrucke an den Schraubenverbindungen und/oder an zumindest einem Flansch der Flanschverbindung aufgebracht werden. Beispielsweise kann die Schraubverbindung und/oder der Flansch mit Transpondern zu Identifizierung mit Hilfe elektromagnetischer Wellen - sogenannten RFID-Transpondern, Optischen Codes - wie beispielsweise QR-Codes und/oder Zeichen - wie beispielsweise Zahlen und/oder Buchstaben - versehen werden. In einer vorteilhaften Ausgestaltung ist vorgesehen, dass zusätzlich oder alternativ zum Identifizierungsmittel eine Identifizierung mittels einer satellitengestützten Positionierung erfolgt, beispielsweise mittels GPS, Galileo und/oder BeiDou.

Es wird die nächste zu spannende Schraubenverbindung ermittelt. In einer bevorzugten Ausgestaltung ist vorgesehen, dass mittels der Recheneinheit eine Spannsequenz ermittelt oder vorgegeben wird, mittels der die die zu spannende Schraubenverbindung ermittelt wird. Die Spannsequenz kann ein Spannen von Schraubenverbindungen nacheinander an der Flanschverbindung umfassen. Weiterhin kann die Spannsequenz ein Schrauben von jeweils gegenüberliegenden Schrauben umfassen. In einer bevorzugten Ausgestaltung ist vorgesehen, dass eine Vielzahl von den Schraubenverbindungen zuordenbaren Spaltmaßen zwischen dem ersten Flansch uns dem zweiten Flansch gemessen wird, wobei die einzelnen gemessenen Spaltma-ße auswertbar und den einzelnen Bolzensystemen zuordenbar bevorzugt mittels der Recheneinheit gespeichert werden, wobei die Spannsequenz eine Reihenfolge des Spannens der Schraubenverbindungen in Abhängigkeit der diesen zugeordneten Spaltmaße vorsieht. Weiter bevorzugt werden Schraubenverbindungen, die einem größeren Spaltmaß zugeordnet sind angezogen bevor Schraubenverbindungen, die einem kleineren Spaltmaß zugordnet sind angezogen werden. In einer weiteren Ausgestaltung werden die Schraubenverbindungen entsprechend ihres zugeordneten Spaltmaßes gruppiert und angezogen. Bevorzugt ist vorgesehen, dass ein Verfahren gemäß der EP 3 593 939 A1, auf die vollumfänglich verwiesen wird, angewendet wird, um eine Spannsequenz zu ermitteln.

Das Werkzeug wird auf bevorzugt auf zumindest einem Flansch der Flanschverbindung bewegt um zur nächsten zu spannenden Schraubenverbindung zu gelangen. Weiter bevorzugt überfährt es dabei die Schraubenverbindungen. Weiter bevorzugt wird das Werkzeug derart auf dem Flansch bewegt, dass das der Schraubenidentifizierungssensor die Identifizierungsmittel auslesen kann.

Weiter ist ein Positionieren des Werkzeuges auf der zu spannenden Schraubenverbindung vorgesehen. In einer Ausgestaltung ist bevorzugt dabei vorgesehen, dass eine korrekte oder falsche Positionierung des Werkzeuges mittels einer Signaleinheit signalisiert wird. Die Signaleinheit kann beispielsweise anzeigen, dass das Werkzeug über der falschen, das heißt nicht der nächsten in der Spannsequenz vorgesehenen Schraubenverbindung positioniert ist. Weiterhin kann die Signaleinheit in einer Ausgestaltung anzeigen, dass das Werkzeug über der richtigen, das heißt der nächsten in der Spannsequenz vorgesehenen Schraubenverbindung positioniert ist. In einer weiteren Ausgestaltung ist vorgesehen, dass mittels der Signaleinheit eine Richtung angezeigt wird, die dem Monteur einen Hinweis darauf gibt, in welche Richtung sich die nächste zu spannende Schraubenverbindung befindet. In einer weiteren Ausgestaltung ist vorgesehen, dass die Signaleinheit die Identifizierung, beispielswiese eine Schrauben-Identifikationsnummer, der nächsten zu spannenden Schraubenverbindung anzeigt.

In einer bevorzugten Ausgestaltung ist vorgesehen, dass die Signaleinheit von der Recheneinheit angesteuert wird. In einer weiteren Ausgestaltung ist vorgesehen, dass die Recheneinheit ein Signal des Schraubenidentifizierungssensors erhält.

Weiterhin ist eine Identifizierung des Schraubenverbindung mittels des Schraubenidentifizierungssensors vorgesehen. In einer Ausgestaltung ist vorgesehen, dass der Schraubenidentifizierungssensor das Identifizierungsmittel ausliest, das der Schraubenverbindung zugeordnet ist, über der das Werkzeug positioniert ist. Bevorzugt wird ein optischer Code oder in Transponder ausgelesen, um die Schraubenverbindung zu identifizieren.

In einer vorteihaften Ausgestaltung ist vorgesehen, dass das Auslesen des Identifizierungsmittels prozessschrittabhängig, kontinuierlich oder in Intervallen erfolgt. Besonders bevorzugt ist vorgesehen, dass ein prozessschrittabhängiges Auslesen des Identifizierungsmittels unmittelbar vor und/oder nach einem prozessrelevanten Schritt erfolgt. In einer weiteren vorteilhaften Ausgestaltung ist vorgesehen, dass bei allen prozessrelevanten Schritten beziehungsweise am Ende eines jeden prozessrelevanten Schrittes eine Prüfung erfolgt, ob das Werkzeug über der richtigen Schraubenverbindung positioniert ist. Bevorzugt wird mittels einer kontinuierlichen Auslesung oder einer Auslesung in kurzen Intervallen sichergestellt, dass die Recheneinheit jederzeit gemeldet bekommt beziehungsweise vom Identifizierungsmittel abfragen kann, auf welcher Schraubenverbindung sich das Werkzeug befindet, um die Signaleinheit und/oder das Schraubenspannmittel entsprechend anzusteuern. Kurze Intervalle sind Intervalle von bevorzugt unter etwa einer Sekunde.

Prozessrelevante Schritte im Sinne der Erfindung sind zumindest ein Lösen der Schraubenverbindung, ein Freigeben des Schraubenspannmittels und/oder ein Spannen der Schraubenverbindung. In einer Ausgestaltung kann ein Dokumentieren von zumindest einem Parameter, ein Drucken auf den Flansch, ein Drucken auf Papier und/oder noch weitere Verfahrensschritte prozessrelevante Schritte sein. Bevorzugt wird dokumentiert, ob die richtige Schraube gespannt wurde. Dabei werden alle prozessrelevanten Parameter und Ereignisse dokumentiert. Die Dokumentation kann elektronisch gespeichert, auf Papier ausgedruckt und/oder auf zumindest einem Flansch der Flanschverbindung aufgedruckt werden. Auch können vorher definierte Daten separiert in speziellen Protokollierungsformen erstellt werden. Bevorzugt wird eine Fehlbedienung und/oder nicht erreichte Zielwerte der Schraubenverbindung ebenfalls dokumentiert.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, bevorzugt ist ein Toleranzbereich von ±20 %, bevorzugt ±10 %, weiter bevorzugt ±5 % vorgesehen.

In einer vorteilhaften Ausgestaltung ist vorgesehen, dass bei jedem Verfahrensschritt mittels des Schraubenidentifizierungssensors die Schraubenverbindung identifiziert wird. Bevorzugt scannt der Schraubenidentifizierungssensor zumindest vor jedem Verfahrensschritt, ob das Werkzeug noch über der zu spannenden Schraubenverbindung positioniert ist. Vorteilhafterweise wird mit einem kontinuierlichen Scannen eine absichtliche oder unabsichtliche Fehlbehandlung bzw. ein Abweichen von einer vorgegebenen Spannreihenfolge sicher unterbunden. Weiterhin vorteilhaft werden durch das vorgeschlagene Verfahren menschliche Fehler und Manipulationen sicher eliminiert.

Weiterhin ist ein Freigeben des Schraubenspannmittels mittels der Recheneinheit vorgesehen. Bevorzugt wird eine Bedienung des Schraubenspannmittels freigegeben. Beispielsweise ist eine Freigabe ein freischalten eines Hydraulikdruckerzeugers des Schraubenspannmittels, die bevorzugt ohne die Freischaltung spannungsfrei geschaltet ist. In einer Ausgestaltung kann das Schraubenspannmittel, bevorzugt bei einer Ausgestaltung als Handpumpe, mechanisch gesperrt werden. In einer weiteren vorteilhaften Ausgestaltung ist vorgesehen, dass eine Fehlbedienung, weiter bevorzugt ein Versuch einer Fehlbedienung, protokolliert wird. In einer weiteren Ausgestaltung ist vorgesehen, dass bei einer Fehlbedienung keine Protokollierung erfolgt und weiter bevorzugt, die Schraubenverbindung als nicht durch das Werkzeug gespannt angesehen wird.

In einer bevorzugten Ausgestaltung ist vorgesehen, dass eine Freigabe des nächsten Prozessschrittes nur dann erfolgt, wenn eine korrekte Positionierung des Werkzeuges vorliegt. Bevorzugt ist vorgesehen, dass eine Freigabe des Schraubenspannmittels nur dann erfolgt, wenn eine korrekte Positionierung des Werkzeuges vorliegt. In einer weiteren bevorzugten Ausgestaltung ist vorgesehen, dass eine Freigabe des Schraubenspannmittels nur dann erfolgt, wenn die zu spannende Schraubenverbindung mittels des Schraubenidentifizierungssensors ermittelt wird. In einer weiteren Ausgestaltung ist vorgesehen, dass eine Freigabe des nächsten Prozessschrittes nur dann erfolgt, wenn die zu spannende Schraubenverbindung mittels des Schraubenidentifizierungssensors identifiziert und korrekt ermittelt wurde. Dies hat den Vorteil, dass der Monteur ein Spannen der Schraubenverbindung des Flansches nicht in der falschen Reihenfolge vornehmen kann. Auch wird durch das erfindungsgemäße Verfahren verhindert, dass eine Schraubenverbindung beim Montieren des Flansches vergessen beziehungsweise übersprungen wird.

Weiterhin ist das Spannen der Schraubenverbindung mittels des Schraubenspannmittels vorgesehen.

Das Spannen kann beispielsweise folgenden Ablauf haben:
(a) Aufbringen einer Zugkraft bis zu einer Rückstellkraft beziehungsweise bis ein Rückstelldruck, beispielsweise von etwa 30 bar bis etwa 100 bar, erreicht wird,
(b) Aufbringen einer Zugkraft auf einen Bolzen der Schraubenverbindung, bis eine bestimmte Maximalkraft erreicht ist, und bevorzugt Ermitteln, weiter bevorzugt kontinuierlich während der Aufbringung der Zugkraft, eines Längungswertes, der mit einer Bolzenlängung, einer Schraubenspannmittelkompression und/oder einer Flanschkompression der Flanschverbindung korreliert,
(c) Nachdrehen einer Mutter der Schraubenverbindung bevorzugt mit einem bestimmten Drehmoment,
(d) Ablassen der Zugkraft auf 0 N,
(e) Aufbringen der Zugkraft auf die Rückstellkraft.

Die Schritte a) bis d) werden in einer Ausgestaltung zumindest einmal wiederholt.

Vor, während und/oder nach jedem Schritt erfolgt bevorzugt eine Dokumentation des Verfahrens.

Die genannten Schritte des beispielhaften Spanens ist nicht limitierend. Weitere Arbeitsfolgen können auch mehrfach ineinander geschachtelt in weiteren Ausgestaltungen möglich sein, wobei bevorzugt alle Schritte dokumentiert werden.

In einer vorteilhaften Ausgestaltung ist vorgesehen, dass Parameter des Spannens der Schraubverbindung mittels der Rechnereinheit dokumentiert werden. Parameter können beispielsweise eine Schrauben-Identifikationsnummer, eine Maximalkraft, ein Längungswert, eine Schraubenspannmittelkompression, eine Flanschkompression, eine erreichte Vorspannkraft, Ergebnisse einer Wegmessung und/oder Winkelmessung beim Spannen der Schraubenverbindung, Name des Monteurs, eine Bezeichnung der Firma, Flanschbezeichnung, Durchmesser der Schraubenverbindung, eine vom Schraubenspannmittel aufgebrachte Spannkraft, ein hydraulischer Druck, eine Lösekraft, eine Chargennummer insbesondere aller verwendeten Werkzeuge, eine Chargennummer beziehungsweise eine Kennung der Schraubenverbindung beziehungsweise dessen Einzelteile, eine Softwareversion der Recheneinheit, ein Datum, eine Uhrzeit, eine Bezeichnung der durchgeführten Operation, eine Qualitative Aussage über den Erfolg des Spannens der Schraubenverbindung, eine Umgebungstemperatur und/oder ein Drehwinkel der Mutter der Schraubenverbindung. Bevorzugt kann die Dokumentation des Spannens der Schraubenverbindungen vor, während und/oder nach dem Spannen der Schraubenverbindung durch das Schraubenspannmittel erfolgen.

Vorzugsweise wird wenigstens einer der Parameter des Spannens der Schraubverbindung mittels einer Signaleinheit signalisiert und/oder angezeigt. Dieses Signalisieren und/oder dieses Anzeigen erfolgt bevorzugt nach jedem Spannvorgang und/oder nach dem Spannvorgang der letzten Schraubverbindung in der Spannsequenz.

In einer weiteren bevorzugten Ausgestaltung ist vorgesehen, dass zumindest ein Parameter des Spannens der Schraubenverbindung auf zumindest einem Flansch der Flanschverbindung dokumentiert wird. Hierzu ist in einer Ausgestaltung vorgesehen, dass der zumindest eine Parameter, bevorzugt alle prozessrelevanten Parameter, auf den Flansch aufgedruckt wird. Bevorzugt weist das Werkzeug einen Drucker auf, der automatisch oder semi-automatisch den zumindest einen Parameter auf dem Flansch aufdruckt. Bevorzugt kann der zumindest eine Parameter in für Menschen lesbarer Form aufgedruckt werden. In einer weiteren Ausgestaltung ist vorgesehen, dass der zumindest eine Parameter in maschinenlesbarer Form auf den Flansch aufgedruckt wird, beispielsweise als optisch auslesbarer Code.

In einer vorteilhaften
Ausgestaltung ist der Drucker auf dem Fahrgestell angeordnet. In einer Ausgestaltung ist vorgesehen, dass mittels des Druckers eine Nummerierung auf der Flanschverbindung aufgebracht wird. Bevorzugt ist die Nummerierung, weiter bevorzugt die erste Schraubenverbindung durch einen Kunden oder einen Hersteller beispielsweise einer Windkraftanlage vorgegeben. Der Drucker druckt bevorzugt die vorgegebene Nummerierung auf den Flansch. Bevorzugt sind mittels des Druckers vorgegebene Nummerierungen oder andere Identifizierungsmittel auf dem Flansch druckbar, insbesondere wenn noch keine Identifizierungsmittel bevorzugt auf dem Flansch vorhanden sind. In einer Ausgestaltung findet bevorzugt bei einer Erstinstallation eine Identifikationsrunde statt, bei der das Werkzeug über alle Schraubenverbindungen gefahren wird und währenddessen oder danach bevorzugt mittels des Druckers die Identifizierungsmittel auf dem Flansch aufgebracht werden. Weiter bevorzugt wird während der Identifikationsrunde eine Spaltmessung vorgenommen, bei der bevorzugt ein Spaltmaß zwischen den Flanschen bei jeder Schraubenverbindung ermittelt wird. In einer weiteren Ausgestaltung ist vorgesehen, dass alle prozessrelevanten Parameter, bevorzugt alle Parameter, die in der Recheneinheit gespeichert werden, weiter bevorzugt alle Parameter die in der Recheneinheit als prozessrelevant markiert sind, auf dem Flansch aufgedruckt werden. Bevorzugt werden jeder Schraubenverbindung zugeordnet Parameter auf dem Flansch aufgedruckt. Die Parameter können maschinenlesbar, bevorzugt als QR-Code, oder im Klartext auf den Flansch aufgebracht werden.

Vorteil des Aufdruckens von Parametern auf zumindest einem Flansch der Flanschverbindung ist, dass beispielsweise bei einer späteren Wartung, bei der die Informationen aus der Recheneinheit nicht vorliegen, der Monteur die bevorzugt prozessrelevanten Parameter für eine Wartung unmittelbar vorliegen hat.

In einer beispielhaften Ausgestaltung ist vorgesehen, dass in eine Flanschverbindung, beispielsweise einer Windkraftanlage, Schraubverbindungen von Hand eingebracht werden.

Die Flanschverbindung umfasst eine Anzahl von Schraubenverbindungen. Die Schraubenverbindungen sind vor einer Erstmontage bevorzugt von Hand in paarweise übereinander angeordneten Flanschausnehmungen der Flanschverbindung eingebracht und verschraubt. Jeder Schraubenverbindung wird ein Identifizierungsmittel zugeordnet, wobei die Zuordnung eineindeutig ist. Die Identifizierungsmittel werden auf der Flanschverbindung innenseitig aufgebracht, bevorzugt aufgedruckt und als optisch auslesbarer Code ausgestaltet, beispielsweise als QR-Code oder ein Transponder in oder an der Schraube. Das Werkzeug wird auf die Flanschverbindung gestellt, so dass diese sich über die Schraubenverbindungen bewegen kann. Das Werkzeug wird bevorzugt von Hand über die Schraubenverbindungen geführt, wobei der Schraubenidentifizierungssensor die Identifizierungsmittel der Schraubenverbindungen ausliest. Mittels der Recheneinheit wird eine Spannsequenz vorgegeben, aus der eine zu spannende Schraubenverbindung ermittelt wird. Solange das Werkzeug nicht über der zu spannenden Schraubenverbindung steht, wird das Schraubenspannmittel nicht freigegeben, so dass der Monteur diese nicht bedienen kann. Ist das Werkzeug über der zu spannenden Schraubenverbindung angekommen, wird dies bevorzugt mittels der Signaleinheit signalisiert und das Schraubenspannmittel freigegeben. Der Monteur kann diese dann bedienen, um die Schraubenverbindung zu spannen. Sollte der Monteur das Werkzeug versehentlich über die zu spannende Schraubenverbindung hinwegbewegen, wird das Schraubenspannmittel bevorzugt umgehend wieder gesperrt.

Bevorzugt wird anhand der ermittelten und protokollierten Daten ein Schlussprotokoll erstellt, aus dem bevorzugt hervor geht, welche Schraubenverbindungen korrekt gespannt wurden und/oder technisch in Ordnung sind. Weiter bevorzugt geht aus dem Schlussprotokoll und/oder aus einem weiteren Fehlerprotokoll hervor, welche Schraubenverbindungen fehlerhaft sind und worin der Fehler besteht.

Vorzugsweise enthält das Fehlerprotokoll Empfehlungen zur Korrektur von fehlerhaften Schraubenverbindungen und/oder von Fehlern. Die Empfehlungen umfassen beispielsweise das erneute Spannen einer fehlerhaften Schraubenverbindung, den Austausch einer fehlerhaften Schraubenverbindung gegen eine neue oder fehlerlose Schraubenverbindung oder das korrekte Einstellen eines fehlerhaften Bolzenüberstandes.

Vorzugsweise werden das Schlussprotokoll und/oder das Fehlerprotokoll und/oder die Empfehlungen mittels einer Signaleinheit signalisiert und/oder angezeigt. Dieses Signalisieren und/oder dieses Anzeigen erfolgt bevorzugt nach jedem Spannvorgang und/oder nach dem Spannvorgang der letzten Schraubverbindung in der Spannsequenz. Das Schlussprotokoll und/oder das Fehlerprotokoll und/oder die Empfehlungen können beispielsweise mittels der Recheneinheit erstellt werden.

In der erfindungsgemäßen Ausgestaltung des Verfahrens
- wird geprüft, ob das Werkzeug oder das Schraubenspannmittel korrekt an der Schraubenverbindung angesetzt ist;
- erfolgt das Freigeben des Schraubenspannmittels, wenn das Ergebnis dieser Prüfung positiv ist, und/oder wird das Schraubenspannmittel gesperrt oder angehalten, wenn das Ergebnis dieser Prüfung negativ oder nicht positiv ist.

Diese Ausgestaltung erhöht die Sicherheit des Monteurs. Denn wenn das Werkzeug oder das Schraubenspannmittel nicht korrekt an der Schraubenverbindung angesetzt ist, dann besteht die Gefahr, dass das Werkzeug oder das Schraubenspannmittel im Betrieb die Schraubenverbindung beschädigt und/oder überraschend das Gewinde des Bolzens abstreift, wodurch der Monteur verletzt werden kann.

Dieses Prüfen kann nach Bedarf auf beliebige Weise erfolgen, beispielsweise mit Hilfe eines Sensors, der dazu ausgebildet ist, einen Abstand zwischen der Schraubenverbindung und dem Werkzeug und/oder einen Abstand zwischen der Schraubenverbindung und dem Schraubenspannmittel zu erfassen. Das Freigeben erfolgt bevorzugt nur dann, wenn das Ergebnis dieser Prüfung positiv ist. Dies bedeutet, dass ein positives Ergebnis dieser Prüfung eine notwendige Bedingung für das Freigeben ist und insbesondere zusammen mit wenigstens einer der übrigen Bedingungen, die in dieser Patentanmeldung in Zusammenhang mit einem Freigeben erwähnt werden, vorliegen muss. Das Prüfen und/oder das Freigeben erfolgen beispielsweise mittels der Recheneinheit.

Vorzugsweise wird das Ergebnis dieser Prüfung mittels einer Signaleinheit signalisiert und/oder angezeigt. Dieses Signalisieren und/oder dieses Anzeigen erfolgt bevorzugt nach jedem Spannvorgang und/oder nach dem Spannvorgang der letzten Schraubverbindung in der Spannsequenz.

In einer beispielhaften Ausgestaltung des Verfahrens
- wird geprüft, ob ein Bolzenüberstand der Schraubenverbindung größer als ein vorbestimmter unterer Schwellenwert ist;
- erfolgt das Freigeben des Schraubenspannmittels, wenn das Ergebnis dieser Prüfung positiv ist, und/oder wird das Schraubenspannmittel gesperrt oder angehalten, wenn das Ergebnis dieser Prüfung negativ oder nicht positiv ist.

Der Bolzenüberstand der Schraubenverbindung ist die Länge desjenigen Gewindeabschnitts des Bolzens dieser Schraubenverbindung, der aus der Mutter dieser Schraubenverbindung herausragt.

Diese Ausgestaltung erhöht die Sicherheit des Monteurs. Denn wenn der Bolzenüberstand den unteren Schwellenwert unterschreitet, dann besteht die Gefahr, dass das Werkzeug oder das Schraubenspannmittel nicht ausreichend fest an dem Bolzen angreift und im Betrieb schlagartig von dem Bolzen abreißt, wodurch der Monteur verletzt werden kann.

Dieses Prüfen kann nach Bedarf auf beliebige Weise erfolgen und umfasst beispielsweise, dass der Bolzenüberstand gemessen und mit dem unteren Schwellenwert verglichen wird.

Das Messen kann nach Bedarf auf beliebige Weise erfolgen, beispielsweise auf die in EP 3 566 815 A1 offenbarte Weise und/oder mit Hilfe der in EP 3 566 815 A1 offenbarten Befestigungsanordnung zum Verspannen von Befestigungsmitteln und/oder im Rahmen des in EP 3 566 815 A1 offenbarten Verfahrens zum Verspannen von Befestigungsmitteln.

Das Freigeben erfolgt bevorzugt nur dann, wenn das Ergebnis dieser Prüfung positiv ist. Dies bedeutet, dass ein positives Ergebnis dieser Prüfung eine notwendige Bedingung für das Freigeben ist und insbesondere zusammen mit wenigstens einer der übrigen Bedingungen, die in dieser Patentanmeldung in Zusammenhang mit einem Freigeben erwähnt werden, vorliegen muss. Das Prüfen und/oder das Freigeben erfolgen beispielsweise mittels der Recheneinheit.

Vorzugsweise wird das Ergebnis dieser Prüfung mittels einer Signaleinheit signalisiert und/oder angezeigt. Dieses Signalisieren und/oder dieses Anzeigen erfolgt bevorzugt nach jedem Spannvorgang und/oder nach dem Spannvorgang der letzten Schraubverbindung in der Spannsequenz.

In einer beispielhaften Ausgestaltung des Verfahrens
- wird geprüft, ob ein Bolzenüberstand der Schraubenverbindung kleiner als ein vorbestimmter oberer Schwellenwert ist;
- erfolgt das Freigeben des Schraubenspannmittels, wenn das Ergebnis dieser Prüfung positiv ist, und/oder wird das Schraubenspannmittel gesperrt oder angehalten, wenn das Ergebnis dieser Prüfung negativ oder nicht positiv ist.

Diese Ausgestaltung erhöht die Sicherheit des Monteurs. Denn wenn der Bolzenüberstand den oberen Schwellenwert überschreitet, dann besteht die Gefahr, dass das Werkzeug oder das Schraubenspannmittel den Bolzen nicht vollständig oder nicht ausreichend oder nicht korrekt spannt und/oder das Werkzeug oder das Schraubenspannmittel beim Ansetzen an den Bolzen und/oder beim Spannen des Bolzens beschädigt wird, wodurch der Monteur verletzt werden kann.

Dieses Prüfen kann nach Bedarf auf beliebige Weise erfolgen und umfasst beispielsweise, dass der Bolzenüberstand gemessen und mit dem oberen Schwellenwert verglichen wird.

Das Messen kann nach Bedarf auf beliebige Weise erfolgen, beispielsweise auf die in EP 3 566 815 A1 offenbarte Weise und/oder mit Hilfe der in EP 3 566 815 A1 offenbarten Befestigungsanordnung zum Verspannen von Befestigungsmitteln und/oder im Rahmen des in EP 3 566 815 A1 offenbarten Verfahrens zum Verspannen von Befestigungsmitteln.

Das Freigeben erfolgt bevorzugt nur dann, wenn das Ergebnis dieser Prüfung positiv ist. Dies bedeutet, dass ein positives Ergebnis dieser Prüfung eine notwendige Bedingung für das Freigeben ist und insbesondere zusammen mit wenigstens einer der übrigen Bedingungen, die in dieser Patentanmeldung in Zusammenhang mit einem Freigeben erwähnt werden, vorliegen muss. Das Prüfen und/oder das Freigeben erfolgen beispielsweise mittels der Recheneinheit.

Vorzugsweise wird das Ergebnis dieser Prüfung mittels einer Signaleinheit signalisiert und/oder angezeigt. Dieses Signalisieren und/oder dieses Anzeigen erfolgt bevorzugt nach jedem Spannvorgang und/oder nach dem Spannvorgang der letzten Schraubverbindung in der Spannsequenz.

Jede der Signaleinheiten kann nach Bedarf auf beliebige Weise ausgebildet sein und umfasst beispielsweise wenigstens einen akustischen Signalgeber und/oder wenigstens einen optischen Signalgeber und/oder wenigstens einen haptischen Signalgeber. Jeder akustische Signalgeber umfasst bevorzugt einen Lautsprecher. Jeder optische Signalgeber umfasst bevorzugt eine Leuchte und/oder eine rote LED und/oder eine grüne LED und/oder ein Blitzlicht und/oder eine Anzeige und/oder einen Bildschirm. Jeder haptische Signalgeber umfasst bevorzugt einen Vibrator.

In einer beispielhaften Ausgestaltung des Verfahrens erfolgt das Prüfen kontinuierlich oder wird in vorbestimmten Intervallen wiederholt.

Dies umfasst insbesondere, dass das Prüfen, ob das Werkzeug oder das Schraubenspannmittel korrekt an der Schraubenverbindung angesetzt ist, kontinuierlich erfolgt oder in vorbestimmten Intervallen wiederholt wird und/oder dass das Prüfen, ob ein Bolzenüberstand der Schraubenverbindung größer als ein vorbestimmter Schwellenwert ist, kontinuierlich erfolgt oder in vorbestimmten Intervallen wiederholt wird.

Vorzugsweise erfolgt das Freigeben des Schraubenspannmittels, solange das Ergebnis dieser kontinuierlichen oder wiederholten Prüfung positiv ist oder bleibt, und/oder wird das Schraubenspannmittel gesperrt oder angehalten, sobald das Ergebnis dieser kontinuierlichen oder wiederholten Prüfung negativ oder nicht positiv ist oder wird.

Weiterhin wird ein manuell bewegbares Werkzeug zur Installation und/oder Wartung einer Flanschverbindung, die eine Mehrzahl von Schraubenverbindungen umfasst, vorgeschlagen. Das Werkzeug umfasst zumindest ein Schraubenspannmittel, eine Recheneinheit und einen Schraubenidentifizierungssensor, wobei mittels des Schraubenidentifizierungssensors die Schraubenverbindungen der Flanschverbindung identifizierbar sind. Mittels der Recheneinheit ist eine Bedienung des Schraubenspannmittels nur dann freigebbar, wenn mittels des Schraubenidentifizierungssensors die Position des Werkzeuges über der von einer Recheneinheit vorgegebenen Schraubenverbindung erkennbar ist. Das Werkzeug umfasst zudem einen Sensor, der dazu ausgebildet ist, einen Abstand zwischen der Schraubenverbindung und dem Werkzeug und/oder einen Abstand zwischen der Schraubenverbindung und dem Schraubenspannmittel zu erfassen. Mittels des Sensors und der Recheneinheit ist prüfbar, ob das Werkzeug oder das Schraubenspannmittel korrekt an der Schraubenverbindung angesetzt ist. Und mittels der Recheneinheit ist das Schraubenspannmittel freigebbar, wenn das Ergebnis dieser Prüfung positiv ist, und/oder kann das Schraubenspannmittel gesperrt oder angehalten werden, wenn das Ergebnis dieser Prüfung negativ oder nicht positiv ist. Das Schraubenspannmittel ist bevorzugt zum hydraulischen spannen der Schraubenverbindungen einer Flanschverbindung geeignet. In einer weiteren Ausgestaltung ist das Schraubenspannmittel zur drehenden Verspannung der Schraubenverbindungen ausgestaltet. Beispielsweise ist das Schraubenspannmittel eine hydraulische Schraubenspannvorrichtung.

Die Recheneinheit ist in einer vorteilhaften Ausgestaltung von den übrigen Bauteilen getrennt angeordnet. In einer Ausgestaltung steht diese beispielsweise kabelgebunden oder über eine Funkverbindung zumindest mit dem Schraubenspannmittel, dem Schraubenidentifizierungssensor, einem Hydraulikdruckerzeuger, einen Drucker, einer weiteren Recheneinheit - beispielsweise einem Server, einem Temperatursensor und/oder der Signaleinheit in Verbindung.

In einer bevorzugten Ausgestaltung ist vorgesehen, dass die Recheneinheit auf dem Fahrgestell angeordnet ist. Beispielsweise ist die Recheneinheit als Tabletcomputer oder Laptop ausgestaltet.

In einer bevorzugten Ausgestaltung ist vorgesehen, dass mittels der Recheneinheit eine Reihenfolge des Spannens der Schraubenverbindungen vorgebbar ist. Beispielsweise weist die Recheneinheit eine Software auf, mittels der eine Spannsequenz ermittelbar ist, bevorzugt auf Grundlage an der Position der jeweiligen Schraubenverbindung in der Flanschverbindung gemessenen Daten, beispielsweise Spaltmaßen.

In einer vorteilhaften Ausgestaltung ist vorgesehen, dass mittels der Recheneinheit Parameter des Spannens bevorzugt zur Steuerung und Qualitätsbewertung vorgebbar sind. Beispielsweise sind mittels der Recheneinheit beim Spannen zu erreichende Parameter vorgebbar, wie beispielsweise eine Schrauben-Identifikationsnummer, die beim Spannen aufgewendete Maximalkraft, ein hydraulischer Druck, der maximale Längungswert, eine maximale zulässige Flanschkompression, eine zu erreichende Vorspannkraft der Schraubenverbindung, und/oder ein Drehwinkel und/oder ein Anzugsmoment der Schraubenverbindung.

In einer bevorzugten Ausgestaltung ist vorgesehen, dass mittels der Recheneinheit eine Bedienung des Schraubenspannmittels gesperrt ist, wenn mittels des Schraubenidentifizierungssensors die Position des Werkzeuges über der von einer Recheneinheit vorgegebenen Schraubenverbindung nicht erkennbar ist. Bevorzugt ist mittels der Recheneinheit eine Pumpe beziehungsweise ein Hydraulikdruckerzeuger des Schraubenspannmittels ansteuerbar beziehungsweise außer Betrieb setzbar. Bevorzugt ist mittels der Recheneinheit eine Pumpe beziehungsweise ein Hydraulikdruckerzeuger des Schraubenspannmittels spannungsfrei schaltbar.

Weiterhin ist in einer vorteilhaften Ausgestaltung vorgesehen, dass mittels der Recheneinheit Parameter des Spannens dokumentierbar sind. So sind bevorzugt vor, während oder nach dem Spannvorgang gemessene Werte an die Recheneinheit übermittelbar und von dieser dokumentierbar beziehungswiese druckbar und/oder speicherbar.

In einerweiteren vorteilhaften Ausgestaltung ist vorgesehen, dass das Werkzeug einen Drucker zur Aufbringung von Dokumentationsdaten auf den Flansch umfasst. In einer Ausgestaltung sind Drucker und Schraubenidentifikationssensor in einem Gehäuse angeordnet.

In einer bevorzugten Ausgestaltung ist vorgesehen, dass der Schraubenidentifizierungssensor ein optisches Auslesegerät ist, beispielsweise eine Kamera oder ein Scanner. In einer vorteilhaften Ausgestaltung ist vorgesehen, dass der Schraubenidentifizierungssensor auch als Sensor für eine Messung von Spaltmaßen zwischen dem ersten Flansch uns dem zweiten Flansch, die einer Vielzahl von den Schraubenverbindungen zuordenbar sind, ausgestaltet ist - beispielsweise als Kamera.

In einer vorteilhaften Ausgestaltung ist vorgesehen, dass das Werkzeug einen Temperatursensor umfasst. Bevorzugt kann mittels des Temperatursensors eine Umgebungstemperatur und/oder eine Flanschtemperatur gemessen werden. Weiter bevorzugt misst der Temperatursensor kontaktlos.

In einer bevorzugten Ausgestaltung ist vorgesehen, dass das Werkzeug eine Signaleinheit aufweist. Bevorzugt ist in einer Ausgestaltung vorgesehen, dass mittels einer Signaleinheit eine Anzeige der Position ausgebbar ist. Mittels der Signaleinheit ist eine qualitative Anzeige ausgebbar, bevorzugt ob das Werkzeug über der zu spannenden Schraubenverbindung positioniert ist oder nicht. In einer weiteren Ausgestaltung ist vorgesehen, dass mittels der Signaleinheit eine Richtungsanzeige ausgebbar ist, mittels der den bevorzug kürzesten Weg zur nächsten zu spannenden Schraubenverbindung anzeigbar ist. In einer weiteren Ausgestaltung ist vorgesehen, dass mittels der Signaleinheit zumindest eine Schrauben-Identifikationsnummer und/oder zumindest ein Parameter zum Spannen der Schraubenverbindung ausgebbar ist. Beispielsweise ist die Signaleinheit als zumindest eine Leuchte oder Display ausgestaltet.

In einer vorteilhaften Ausgestaltung umfasst das Werkzeug ein Fahrgestell. In einer weiteren vorteilhaften Ausgestaltung ist vorgesehen, dass das Werkzeug mittels des Fahrgestells manuell bewegbar ist. Bevorzugt ist das Werkzeug auf der Flanschverbindung verfahrbar. Weiter bevorzugt ist das Fahrgestell derart ausgestaltet, dass dieses über die Schraubenverbindungen hinweg fahrbar ist. Weiter bevorzugt weist das Fahrgestell eine Anzahl von Rollen oder Rädern auf. In einer Ausgestaltung trägt das Fahrgestell zumindest das Schraubenspannmittel, den Schraubenidentifizierungssensor und/oder die Recheneinheit.

Beispielsweise umfasst das Fahrgestell etwa drei oder etwa vier Rollen oder Räder. Die Spurweite der Rollen oder Räder ist bevorzugt derart ausgestaltet, dass die Schraubenverbindungen zwischen diesen passen. Weiterhin weißt das Fahrgestell bevorzugt eine Trägerplatte auf, auf der zumindest das Schraubenspannmittel, den Schraubenidentifizierungssensor und/oder die Recheneinheit angeordnet sind. Bevorzugt sind Rollen oder Räder und Trägerplatte derart ausgestaltet, dass die Trägerplatte über den Schraubenverbindungen bewegbar ist. Weiter bevorzugt weist die Trägerplatte eine Ausnehmung auf, durch bevorzugt zumindest die die Schraubenspannvorrichtung absenkbar ist, bevorzugt um eine darunter angeordnete Schraubenverbindung zu spannen. In einer Ausgestaltung ist an dem Fahrgestell ein Kragarm angeordnet, der bevorzugt teilweise nach unten ragt. Bevorzugt ragt der Kragarm in eine Ebene unterhalb der Rollen oder Räder. Bevorzugt ist am Kragarm, weiter bevorzugt an einem unteren Ende des Kragarms zumindest das Schraubenidentifizierungsmittel, der Drucker und/oder der Temperatursensor angeordnet, bevorzugt derart, dass das Schraubenidentifizierungsmittel, der Drucker und/oder der Temperatursensor mit der Flanschverbindung davon interagieren können.

In einer vorteilhaften Ausgestaltung ist vorgesehen, dass das Werkzeug zumindest einen Handgriff aufweist, der bevorzugt an dem Fahrgestell angeordnet ist.

Eine beispielhafte Ausgestaltung des manuell bewegbaren Werkzeugs, welches zur Installation und/oder Wartung einer Flanschverbindung eingesetzt werden kann, umfasst ein Fahrgestell mit Rollen auf dem ein Schraubenspannmittel und ein Schraubenidentifizierungssensor angeordnet sind. Eine Recheneinheit ist über eine Funkverbindung oder über zumindest ein Kabel mit dem Schraubenidentifizierungssensor und des Schraubenspannmittels verbindbar. Weiterhin ist auf dem Fahrgestell eine Signaleinheit anordenbar. Bevorzugt weist das Werkzeug einen Handgriff auf, bevorzugt am Fahrgestell angeordnet. Dieser ermöglicht ein einfaches Bewegen des Werkzeuges auf der Flanschverbindung.

In einer beispielhaften Ausgestaltung weist das Werkzeug einen Drucker auf, mittels dem der Flansch bedruckbar ist. Bevorzugt kann mittels des Druckers die Identifizierungsmittel auf die Flanschverbindung aufgebracht werden. In einer weiteren Beispielhaften Ausgestaltung ist vorgesehen, dass alle oder einige gemessene Parameter nach dem Spannen der Schraubenverbindung auf den Flansch aufgedruckt werden. Bevorzugt ist der Drucker ein Tintenstrahldrucker.

Der Schraubenidentifizierungssensor ist beispielhaft über einen Kragarm mit dem Fahrgestell verbunden. Dieser erlaubt eine Ausrichtung des Schraubenidentifizierungssensors auf Identifizierungsmittel, die beispielhaft innenseitig an zumindest einem Flansch der Flanschverbindung angebracht sind, beispielsweise mittels des Druckers. Der Schraubenidentifizierungssensor ist beispielhaft als optischer Scanner ausgestaltet, kann aber wie oben ausgeführt auch als Kamera oder Funksensor, bevorzugt zum Auslesen von Transpondern, ausgestaltet sein. Mittels des Schraubenidentifizierungssensors sind die Schraubenverbindungen identifizierbar. Am Kragarm ist beispielsweise auch ein Temperatursensor angeordnet, mittels dem bevorzugt eine Temperatur des Flansches, der Schraubenverbindung und/oder der Umgebung messbar ist. Ein Signal, beispielsweise vom Schraubenidentifizierungssensor, wird an die Recheneinheit gesendet, die dieses auswertet. Erkennt die Recheneinheit anhand des Signales, dass das Werkzeug über der zu spannenden Schraubenverbindung positioniert ist, ist über diese die Bedienung des Schraubenspannmittels freigebbar. Weiterhin ist über die Recheneinheit ein Signal über die Signaleinheit ausgebbar, damit beispielhaft ein Monteur weiß, dass das Werkzeug über der zu spannenden Schraubenverbindung positioniert ist. Der Monteur kann im Folgenden die zu verspannende Schraubenverbindung mit dem Schraubenspannmittel spannen.

Weiterhin wird eine Verwendung eines der vorgeschlagenen manuell bewegbaren Werkzeuge in einem der vorgeschlagenen Verfahren zur Installation und/oder Wartung einer Flanschverbindung vorgeschlagen.

Weitere vorteilhafte Ausgestaltungen gehen aus den nachfolgenden Zeichnungen hervor.

Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:

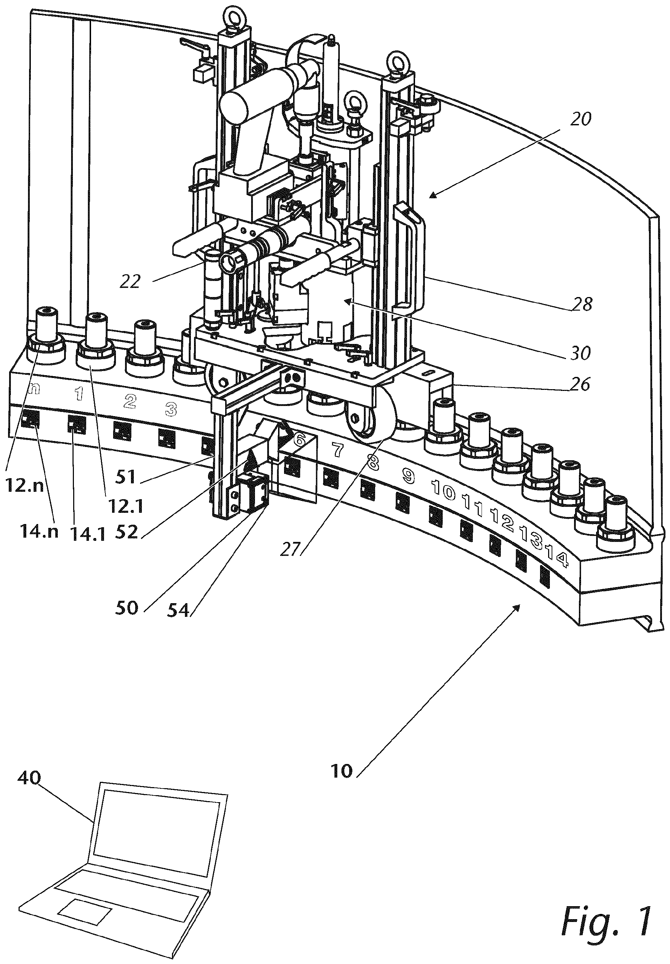

FIG. 1 ein Werkzeug auf einer Flanschverbindung.

FIG. 1 zeigt ein manuell bewegbares Werkzeug 20, welches zur Installation und/oder Wartung einer Flanschverbindung 10 eingesetzt werden kann. Die Flanschverbindung 10 umfasst eine Anzahl von Schraubenverbindungen 12.1 bis 12.n, die der Übersicht halber nicht alle bezeichnet sind. Die Schraubenverbindungen 12.1 bis 12.n sind vor einer Erstmontage bevorzugt von Hand in die nicht bezeichneten paarweise übereinander angeordneten Flanschausnehmungen der Flanschverbindung 10 eingebracht und verschraubt. Jeder Schraubenverbindung 12.1 bis 12.n ist ein Identifizierungsmittel 14.1 bis 14.n zugeordnet, wobei die Zuordnung eineindeutig ist. In der Figur sind der übersichtshalber nicht alle Schraubenverbindungen und 12.1 bis 12.n und Identifizierungsmittel 14.1 bis 14.n gezeigt beziehungsweise bezeichnet. Die Identifizierungsmittel 14.1 bis 14.n sind auf der Flanschverbindung 10 innenseitig aufgebracht, bevorzugt mittels des Druckers 52 aufgedruckt. Die Identifizierungsmittel sind in der gezeigten Ausgestaltung als optisch auslesbarer Code ausgestaltet, bevorzugt als QR-Code, und/oder als Zahlen im Klartext aufgedruckt.

Das Werkzeug 20 umfasst ein Fahrgestell 26 mit Rollen 27, auf dem ein Schraubenspannmittel 30 und ein Schraubenidentifizierungssensor 50 angeordnet sind. Eine Recheneinheit 40 ist über eine Funkverbindung mit dem Schraubenidentifizierungssensor 50 und dem Schraubenspannmittel 30 verbunden. Weiterhin ist auf dem Fahrgestell 26 eine Signaleinheit 22 angeordnet. Ein Handgriff 28 ermöglicht ein einfaches Bewegen des Werkzeuges 20 auf der Flanschverbindung 10.

Der Schraubenidentifizierungssensor 50 ist über einen Kragarm 51 mit dem Fahrgestell 26 verbunden. Dieser erlaubt eine Ausrichtung des Schraubenidentifizierungssensors 50 auf die Identifizierungsmittel 14.1 bis 14.n. Der Schraubenidentifizierungssensor 50 ist als optischer Scanner ausgestaltet, kann aber wie in der allgemeinen Beschreibung ausgeführt auch als Kamera oder Funksensor, bevorzugt zum Auslesen von Transpondern ausgestaltet sein. Mittels des Schraubenidentifizierungssensors 50 werden die Schraubenverbindungen 12.1 bis 12.n identifiziert. Ein Signal wird an die Recheneinheit 40 gesendet, die dieses auswertet. Erkennt die Recheneinheit 40 anhand des Signales, dass das Werkzeug 20 über der zu spannenden Schraubenverbindung 12 positioniert ist, gibt diese die Bedienung des Schraubenspannmittels 30 frei. Weiterhin gibt die Recheneinheit 40 ein Signal über die Signaleinheit 22 aus, damit der Monteur weiß, dass das Werkzeug 20 über die nächste zu spannenden Schraubenverbindung positioniert werden muss. Der Monteur kann im Folgenden die zu verspannende Schraubenverbindung mit dem Schraubenspannmittel 30 spannen.

Am Kragarm 51 ist auch ein Temperatursensor 54 angeordnet, mittels dem eine Temperatur der Flanschverbindung 10, der Schraubenverbindung 12.1 bis 12.n oder einer Umgebung messbar ist.

Mit dem vorgeschlagenen Verfahren, dem Werkzeug und der Verwendung kann vorteilhafterweise eine bevorzugt manuelle Montage der Flanschverbindung 10 erfolgen, ohne dass die Gefahr besteht, dass eine Schraubenverbindung 12.1 bis 12.n vergessen wird zu spannen oder eine falsche Reihenfolge einer vorgegebenen Spannsequenz ausgeführt wird oder eine Schraubenverbindung gar nicht, mehrfach oder zu oft vorgespannt wird. Auch kann vorteilhafterweise eine für einen Monteur komplizierte Spannsequenz einfach realisiert werden, da eine falsche Spannreihenfolge durch das Werkzeug 20 vermieden wird. Ein besonderer Vorteil ist die Eliminierung jeglichen menschlichen Fehlers und/oder eine Manipulation durch einen Monteur.

## Patentansprüche

1. Verfahren zur Installation und/oder Wartung einer Flanschverbindung (10), die eine Mehrzahl von Schraubenverbindungen (12.1 bis 12.n) umfasst, mit einem manuell bewegbaren Werkzeug (20) zumindest umfassend ein Schraubenspannmittel (30), eine Recheneinheit (40) und einen Schraubenidentifizierungssensor (50), wobei die Schritte ausgeführt werden:
- Zuordnen einer eineindeutigen Identifizierung zu jeder Schraubenverbindung (12.1 bis 12.n) der Flanschverbindung (10),
- Ermitteln einer zu spannenden Schraubenverbindung (12.1 bis 12.n),
- Positionieren des Werkzeuges (20) auf der zu spannenden Schraubenverbindung (12.1 bis 12.n),
- Identifizierung der Schraubenverbindung (12.1 bis 12.n) mittels des Schraubenidentifizierungssensors (50),
- Freigeben des Schraubenspannmittels (30) mittels der Recheneinheit (40),
- Spannen der Schraubenverbindung (12.1 bis 12.n) mittels des Schraubenspannmittels (30);
**dadurch gekennzeichnet, dass**
- geprüft wird, ob das Werkzeug (20) oder das Schraubenspannmittel (30) korrekt an der Schraubenverbindung (12.1 bis 12.n) angesetzt ist; und
- das Freigeben des Schraubenspannmittels (30) erfolgt, wenn das Ergebnis dieser Prüfung positiv ist, und/oder das Schraubenspannmittel (30) gesperrt oder angehalten wird, wenn das Ergebnis dieser Prüfung negativ oder nicht positiv ist.

2. Verfahren gemäß Anspruch 1, wobei
- die Schraubenverbindungen (12.1 bis 12.n) mittels Identifizierungsmittel (14.1 bis 14.n) eineindeutig gekennzeichnet werden.

3. Verfahren gemäß Anspruch 2, wobei
- der Schraubenidentifizierungssensor (50) das Identifizierungsmittel (14.1 bis 14.n) ausliest, welches der Schraubenverbindung (12.1 bis 12.n) zugeordnet ist, über der das Werkzeug (20) positioniert ist.

4. Verfahren gemäß Anspruch 3, wobei
- das Auslesen des Identifizierungsmittels (14.1 bis 14.n) prozessschrittabhängig, kontinuierlich oder in Intervallen erfolgt.

5. Verfahren gemäß einem oder mehreren der Ansprüche 2 bis 4, wobei
- als Identifizierungsmittel (14.1 bis 14.n) funkauslesbare Chips, optische Codes und/oder absolute oder relative Positionen am Flansch verwendet werden.

6. Verfahren gemäß einem oder mehreren der vorhergehenden Ansprüche, wobei
- bei jedem Verfahrensschritt mittels des Schraubenidentifizierungssensors (50) die Schraubenverbindung (12.1 bis 12.n) identifiziert wird.

7. Verfahren gemäß einem oder mehreren der vorhergehenden Ansprüche, wobei
- Parameter des Spannens der Schraubenverbindung (12.1 bis 12.n) mittels der Rechnereinheit (40) dokumentiert werden; und/oder
- zumindest ein Parameter des Spannens der Schraubenverbindung (12.1 bis 12.n) auf dem Flansch dokumentiert wird; und/oder
- zumindest ein Parameter des Spannens der Schraubenverbindung (12.1 bis 12.n) mittels einer Signaleinheit (22) signalisiert und/oder angezeigt wird, wobei dieses Signalisieren und/oder dieses Anzeigen nach jedem Spannvorgang und/oder nach dem Spannvorgang der letzten Schraubverbindung (12.1 bis 12.n) in einer Spannsequenz erfolgt; und/oder
- ein Schlussprotokoll und/oder ein Fehlerprotokoll und/oder Empfehlungen zur Korrektur von fehlerhaften Schraubenverbindungen (12.1 bis 12.n) erstellt und mittels einer Signaleinheit (22) signalisiert und/oder angezeigt werden, wobei dieses Signalisieren und/oder dieses Anzeigen nach jedem Spannvorgang und/oder nach dem Spannvorgang der letzten Schraubverbindung (12.1 bis 12.n) in einer Spannsequenz erfolgt.

8. Verfahren gemäß einem oder mehreren der vorhergehenden Ansprüche, wobei
- eine Freigabe des Schraubenspannmittels (30) nur dann erfolgt, wenn eine korrekte Positionierung des Werkzeuges (20) vorliegt; und/oder
- eine Freigabe des nächsten Prozessschrittes nur dann erfolgt, wenn die zu spannende Schraubenverbindung (12.1 bis 12.n) mittels des Schraubenidentifizierungssensors (50) identifiziert und korrekt ermittelt wurde ; und/oder
- eine korrekte oder falsche Positionierung des Werkzeuges (20) mittels einer Signaleinheit (22) signalisiert wird ; und/oder
- eine Funktion des Werkzeuges (20) gesperrt wird, wenn eine falsche Positionierung erkannt wird.

9. Verfahren gemäß einem oder mehreren der vorhergehenden Ansprüche, wobei
- mittels der Recheneinheit (40) eine Spannsequenz ermittelt oder vorgegeben wird, mittels der die die zu spannende Schraubenverbindung (12.1 bis 12.n) ermittelt wird; und/oder
- das Werkzeug (20) einen Drucker (52) aufweist, mittels dem Identifizierungsmittel (14.1 bis 14.n) und/oder Dokumentationsdaten auf den Flansch aufgebracht werden.

10. Verfahren gemäß einem oder mehreren der vorhergehenden Ansprüche, wobei
- geprüft wird, ob ein Bolzenüberstand der Schraubenverbindung (12.1 bis 12.n) größer als ein vorbestimmter unterer Schwellenwert ist;
- das Freigeben des Schraubenspannmittels (30) erfolgt, wenn das Ergebnis dieser Prüfung positiv ist, und/oder das Schraubenspannmittel (30) gesperrt oder angehalten wird, wenn das Ergebnis dieser Prüfung negativ oder nicht positiv ist.

11. Verfahren gemäß einem oder mehreren der vorhergehenden Ansprüche, wobei
- geprüft wird, ob ein Bolzenüberstand der Schraubenverbindung (12.1 bis 12.n) kleiner als ein vorbestimmter oberer Schwellenwert ist;
- das Freigeben des Schraubenspannmittels (30) erfolgt, wenn das Ergebnis dieser Prüfung positiv ist, und/oder das Schraubenspannmittel (30) gesperrt oder angehalten wird, wenn das Ergebnis dieser Prüfung negativ oder nicht positiv ist.

12. Verfahren gemäß einem oder mehreren der vorhergehenden Ansprüche, wobei
- das Prüfen kontinuierlich erfolgt oder in vorbestimmten Intervallen wiederholt wird.

13. Manuell bewegbares Werkzeug (20) zur Installation und/oder Wartung einer Flanschverbindung (10), die eine Mehrzahl von Schraubenverbindungen (12.1 bis 12.n) umfasst, zumindest umfassend
- ein Schraubenspannmittel (30),
- eine Recheneinheit (40),
- einen Schraubenidentifizierungssensor (50), und
- einen Sensor, der dazu ausgebildet ist, einen Abstand zwischen der Schraubenverbindung (12.1 bis 12.n) und dem Werkzeug (20) und/oder einen Abstand zwischen der Schraubenverbindung (12.1 bis 12.n) und dem Schraubenspannmittel (30) zu erfassen,
wobei
- mittels des Schraubenidentifizierungssensors (50) die Schraubenverbindungen (12.1 bis 12.n) der Flanschverbindung (10) identifizierbar sind,
- mittels der Recheneinheit (40) eine Bedienung des Schraubenspannmittels (30) nur dann freigebbar ist, wenn mittels des Schraubenidentifizierungssensors (50) die Position des Werkzeuges (20) über der von einer Recheneinheit (40) vorgegebenen Schraubenverbindung (12.1 bis 12.n) erkennbar ist;
- mittels des Sensors und der Recheneinheit (40) prüfbar ist, ob das Werkzeug (20) oder das Schraubenspannmittel (30) korrekt an der Schraubenverbindung (12.1 bis 12.n) angesetzt ist; und
- mittels der Recheneinheit (40) das Schraubenspannmittel (30) freigebbar ist, wenn das Ergebnis dieser Prüfung positiv ist, und/oder das Schraubenspannmittel (30) gesperrt oder angehalten werden kann, wenn das Ergebnis dieser Prüfung negativ oder nicht positiv ist.

14. Werkzeug (20) gemäß Anspruch 13, wobei
- mittels der Recheneinheit (40) eine Bedienung des Schraubenspannmittels (30) gesperrt ist, wenn mittels des Schraubenidentifizierungssensors (50) die Position des Werkzeuges (20) über der von einer Recheneinheit (40) vorgegebenen Schraubenverbindung (12.1 bis 12.n) nicht erkennbar ist.

15. Werkzeug (20) gemäß Anspruch 13 bis 14, wobei
- mittels einer Signaleinheit (22) eine Anzeige der Position ausgebbar ist.

16. Werkzeug (20) gemäß einem oder mehreren der Ansprüche 13 bis 15, wobei
- das Werkzeug (20) mittels eines Fahrgestells (26) manuell bewegbar ist.

17. Werkzeug (20) gemäß einem oder mehreren der Ansprüche 13 bis 16, wobei
- mittels der Recheneinheit (40) eine Reihenfolge des Spannens der Schraubenverbindungen (12.1 bis 12.n) vorgebbar ist.

18. Werkzeug (20) gemäß einem oder mehreren der Ansprüche 13 bis 17, wobei
- mittels der Recheneinheit (40) Parameter des Spannens vorgebbar sind.

19. Werkzeug (20) gemäß einem oder mehreren der Ansprüche 13 bis 18, wobei
- mittels der Recheneinheit (40) Parameter des Spannens dokumentierbar sind.

20. Werkzeug gemäß einem oder mehreren der Ansprüche 13 bis 19, wobei
- das Werkzeug (20) einen Drucker (51) zur Aufbringung von Identifizierungsmitteln (14.1 bis 14.n) und/oder Dokumentationsdaten auf einen Flansch der Flanschverbindung (10) umfasst.

21. Verwendung eines manuell bewegbaren Werkzeugs (20), das gemäß einem oder mehreren der Ansprüche 13 bis 20 ausgebildet ist, in einem Verfahren gemäß einem oder mehreren der Ansprüche 1 bis 12 zur Installation und/oder Wartung einer Flanschverbindung (10).

## Claims

1. Method for installation and/or maintenance of a flange connection (10) comprising a plurality of screw connections (12.1 to 12.n) with a manually movable tool (20) at least comprising a screw tensioning means (30), a processing unit (40) and a screw identification sensor (50), wherein the steps are carried out:
- assigning a one-to-one identification to each screw connection (12.1 to 12.n) of the flange connection (10),
- determining a screw connection (12.1 to 12.n) to be tensioned,
- positioning the tool (20) on the screw connection (12.1 to 12.n) to be tensioned,
- identifying the screw connection (12.1 to 12.n) by means of the screw identification sensor (50),
- releasing the screw tensioning means (30) by means of the processing unit (40),
- tensioning the screw connection (12.1 to 12.n) by means of the screw tensioning means (30);
**characterized in that**
- it is checked whether the tool (20) or the screw tensioning means (31) is placed correctly on the screw connection (12.1 to 12.n); and
- the screw tensioning means (30) is released when the result of this check is positive and/or the screw tensioning means (30) is blocked or stopped when the result of this check is negative or not positive.

2. Method according to claim 1, wherein
- the screw connections (12.1 to 12.n) are characterized one-to-one by means of identification means (14.1 to 14.n).

3. Method according to 2laim 2, wherein
- the screw identification sensor (50) reads out the identification means (14.1 to 14.n) which is assigned to the screw connection (12.1 to 12.n) above which the tool (20) is positioned.

4. Method according to claim 3, wherein
- the readout of the identification means (14.1 to 14.n) is carried out continuously or at intervals, depending on the process.

5. Method according to one of caims 2 to 4, wherein
- radio-readable chips, optical codes and/or absolute or relative positions on the flange are used as identification means (14.1 to 14.n).

6. Method according to one or more of the preceding claims, wherein
- in each process step the screw connection (12.1 to 12.n) is identified by means of the screw identification sensor (50).

7. Method according to one or more of the preceding claims, wherein
- parameters of the tensioning of the screw connection (12.1 to 12.n) are documented by means of the processing unit (40); and/or
- at least one parameter of the tensioning of the screw connection (12.1 to 12.n) is documented on the flange; and/or
- at least one parameter of the tensioning of the screw connection (12.1 to 12.n) is signalled and/or displayed by means of a signal unit (22), wherein this signalling and/or this display takes place after each tensioning process and/or after the tensioning process of the last screw connection (12.1 to 12.n) in a tensioning sequence; and/or
- a conclusion protocol and/or an error protocol and/or recommendations for the correction of defective screw connections (12.1 to 12.n) are created and signalled and/or displayed by means of a signal unit (12), wherein this signalling and/or this display takes place after each tensioning process and/or after the tensioning process of the last screw connection (12.1 to 12.n) in a tensioning sequence,

8. Method according to one or more of the preceding claims, wherein
- a release of the screw tensioning means (30) takes place only when there is a correct positioning of the tool (20); and/or
- a release of the next process step takes place only when the screw connection (12.1 to 12.n) to be tensioned has been correctly identified and determined by means of the screw identification sensor (50); and/or
- a correct or incorrect positioning of the tool (20) is signalled by means of a signal unit (22); and/or
- a function of the tool (20) is blocked when an incorrect positioning is identified.

9. Method according to one or more of the preceding claims, wherein
- a tensioning sequence is determined or predefined by means of the processing unit (40), by means of which the screw connection (12.1 to 12.n) to be tensioned is determined; and/or
- the tool (20) comprises a printer (52) by means of which identification means (14.1 to 14.n) and/or documentation data are applied to the flange.

10. Method according to one or more of the preceding claims, wherein
- it is checked whether a bolt projection of the screw connection (12.1 to 12.n) is greater than a predetermined lower threshold value;
- the screw tensioning means (30) is released when the result of this check is positive and/or the screw connection means (30) is blocked or stopped when the result of this check is negative or not positive.

11. Method according to one or more of the preceding claims, wherein
- it is checked whether a bolt projection of the screw connection (12.1 to 12.n) is smaller than a predetermined upper threshold value;
- the screw tensioning means (30) is released when the result of this check is positive and/or the screw connection means (30) is blocked or stopped when the result of this check is negative or not positive.

12. Method according to one or more of the preceding claims, wherein
- the checking takes place continuously or is repeated at certain intervals.

13. Manually movable tool (20) for installation and/or maintenance of a flange connection (10), comprising a plurality of screw connections (12.1 to 12.n) , at least comprising
- a screw tensioning means (30),
- a processing unit (40) and
- a screw identification sensor (50), and
- a sensor that is configured to detect a distance between the screw connection (12.1 to 12.n) and the tool (20) and/or a distance between the screw connection (12.1 to 12.n) and the screw tensioning means,
wherein
- the screw connections (12.1 to 12.n) of the flange connection (10) can be identified by means of the screw identification sensor (50),
- by means of the processing unit (40) operation of the screw tensioning means (30) can only be released when the position of the tool (20) above the screw connection (12.1 to 12.n) predefined by a processing unit (40) can be identified by means of the screw identification sensor (50),
- by means of the sensor and the processing unit (40), it can be checked whether the tool (20) or the screw tensioning means (30) is correctly placed on the screw connection (12.1 to 12.n); and
- the screw tensioning means (30) can be released by means of the processing unit (40) when the result of this check is positive and/or the screw tensioning means (30) can be blocked or stopped when the result of this check Is negative or not positive.

14. Tool (20) according to claim 13, wherein
- by means of the processing unit (40), operation of the screw tensioning means (30) is blocked when the position of the tool (20) above the screw connection (12.1 to 12.n) predefined by a processing unit (40) cannot be identified by means of the screw identification sensor (50).

15. Tool (20) according to claim 13 to 14, wherein
- a display of the position can be output by means of a signal unit (22).

16. Tool (20) according to one or more of claims 13 to 15, wherein
- the tool (20) is movable manually by means of a chassis (26).

17. Tool (20) according to one or more of claims 13 to 16, wherein
- a sequence of the tensioning of the screw connections (12.1 to 12.n) can be predefined by means of the processing unit (40).

18. Tool (20) according to one of more of claims 13 to 17, wherein
- parameters of the tensioning can be predefined by means of the processing unit (40).

19. Tool (20) according to one or more of claims 13 to 18, wherein
- parameters of the tensioning can be documented by means of the processing unit (40).

20. Tool according to one or more of claims 13 to 19, wherein
- the tool (20) comprises a printer (51) for application of identification means (14.1 to 14.n) and/or documentation data to a flange of the flange connection (10).

21. Use of a manually movable tool (20) embodied according to one or more of claims 13 to 20 in a method according to one or more of claims 1 to 12 for installation and/or maintenance of a flange connection (10).

## Revendications

1. Procédé pour installer et/ou entretenir un raccordement à bride (10) qui comprend une pluralité de raccords vissés (12.1 à 12.n), avec un outil pouvant être déplacé manuellement (20) comprenant au moins un moyen de serrage de vis (30), une unité de calcul (40) et un capteur d'identification de vis (50), selon lequel les étapes suivantes sont exécutées :
- attribution d'un identifiant univoque à chaque raccord vissé (12.1 à 12.n) du raccordement à bride (10),
- détermination d'un raccord vissé (12.1 à 12.n) à serrer,
- positionnement de l'outil (20) sur le raccord vissé (12.1 à 12.n) à serrer,
- identification du raccord vissé (12.1 à 12.n) au moyen du capteur d'identification de vis (50),
- déblocage du moyen de serrage de vis (30) au moyen de l'unité de calcul (40) et
- serrage du raccord vissé (12.1 à 12.n) au moyen du moyen de serrage de vis(30), **caractérisé en ce**
- **qu'**il est contrôlé si l'outil (20) ou le moyen de serrage de vis (30) est correctement appliqué sur le raccord vissé (12.1 à 12.n) ; et
- **que** le déblocage du moyen de serrage de vis (30) a lieu si le résultat de ce contrôle est positif et/ou le moyen de serrage de vis (30) est bloqué ou arrêté si le résultat de ce contrôle est négatif ou n'est pas positif.

2. Procédé selon la revendication 1, selon lequel
- les raccords vissés (12.1 à 12.n) sont identifiés de manière univoque au moyen de moyens d'identification (14.1 à 14.n).

3. Procédé selon la revendication 2, selon lequel
- le capteur d'identification de vis (50) lit le moyen d'identification (14.1 à 14.n) qui est associé au raccord vissé (12.1 à 12.n) au-dessus duquel l'outil (20) est positionné.

4. Procédé selon la revendication 3, selon lequel
- la lecture du moyen d'identification (14.1 à 14.n) a lieu en fonction des étapes de processus, en continu ou par intervalles.

5. Procédé selon une ou plusieurs des revendications 2 à 4, selon lequel
- en guise de moyens d'identification (14.1 à 14.n) sont utilisés des puces lisibles par radio, des codes optiques et/ou des positions absolues ou relatives sur la bride.

6. Procédé selon une ou plusieurs des revendications précédentes, selon lequel
- à chaque étape de processus, le raccord vissé (12.1 à 12.n) est identifié au moyen du capteur d'identification de vis (50).

7. Procédé selon une ou plusieurs des revendications précédentes, selon lequel
- des paramètres du serrage du raccord vissé (12.1 à 12.n) sont documentés au moyen de l'unité de calcul (40) ; et/ou
- au moins un paramètre du serrage du raccord vissé (12.1 à 12.n) est documenté sur la bride ; et/ou
- au moins un paramètre du serrage du raccord vissé (12.1 à 12.n) est signalé et/ou affiché au moyen d'une unité de signalisation (22), cette signalisation et/ou cet affichage ayant lieu après chaque opération de serrage et/ou après l'opération de serrage du dernier raccord vissé (12.1 à 12.n) dans une séquence de serrage ; et/ou
- un protocole final et/ou un protocole d'erreurs et/ou des recommandations pour la correction de raccords vissés (12.1 à 12.n) défectueux sont établis et signalés et/ou affichés au moyen d'une unité de signalisation (22), cette signalisation et/ou cet affichage ayant lieu après chaque opération de serrage et/ou après l'opération de serrage du dernier raccord vissé (12.1 à 12.n) dans une séquence de serrage.

8. Procédé selon une ou plusieurs des revendications précédentes, selon lequel
- un déblocage du moyen de serrage de vis (30) n'a lieu qu'en présence d'un positionnement correct de l'outil (20) ; et/ou
- un déblocage de l'étape de processus suivante n'a lieu que quand le raccord vissé (12.1 à 12.n) à serrer a été identifié et correctement déterminé au moyen du moyen du capteur d'identification de vis (50) ; et/ou
- un positionnement correct ou incorrect de l'outil (20) est signalé au moyen d'une unité de signalisation ; et/ou
- une fonction de l'outil (20) est bloquée quand un positionnement incorrect a été identifié.

9. Procédé selon une ou plusieurs des revendications précédentes, selon lequel
- au moyen de l'unité de calcul (40) est déterminée ou prédéfinie une séquence de serrage au moyen de laquelle le raccord vissé (12.1 à 12.n) à serrer est déterminé et/ou
- l'outil (20) comporte une imprimante (52) au moyen de laquelle des moyens d'identification (14.1 à 14.n) et/ou des données de documentation sont apposées sur la bride.

10. Procédé selon une ou plusieurs des revendications précédentes, selon lequel
- il est contrôlé si une saillie de boulon du raccord vissé (12.1 à12.n) est supérieure à une valeur-seuil prédéfinie ;
- la libération du moyen de serrage de vis (30) a lieu si le résultat de ce contrôle est positif et/ou le moyen de serrage de vis (30) est bloqué ou arrêté si le résultat de ce contrôle est négatif ou n'est pas positif.

11. Procédé selon une ou plusieurs des revendications précédentes, selon lequel
- il est contrôlé si une saillie de boulon du raccord vissé (12.1 à12.n) est inférieure à une valeur-seuil supérieure prédéfinie ;
- le déblocage du moyen de serrage de vis (30) a lieu si le résultat de ce contrôle est positif et/ou le moyen de serrage de vis (30) est bloqué ou arrêté si le résultat de ce contrôle est négatif ou n'est pas positif.

12. Procédé selon une ou plusieurs des revendications précédentes, selon lequel
- le contrôle a lieu en continu ou est répété à intervalles prédéfinis.

13. Outil pouvant être déplacé manuellement (20) pour installer et/ou entretenir un raccordement à bride (10) qui comprend une pluralité de raccords vissés (12.1 à 12.n), comprenant au moins
- un moyen de serrage de vis (30),
- une unité de calcul (40),
- un capteur d'identification de vis (50) et
- un capteur qui est conçu pour enregistrer une distance entre le raccord vissé (12.1 à 12.n) et l'outil (20) et/ou une distance entre le raccord vissé (12.1 à 12.n) et le moyen de serrage de vis (30),
dans lequel
- les raccords vissés (12.1 à 12.n) du raccordement à bride (10) peuvent être identifiés au moyen du capteur d'identification de vis (50),
- une utilisation du moyen de serrage de vis (30) est déblocable, au moyen de l'unité de calcul (40), uniquement si la position de l'outil (20) au-dessus du raccord vissé (12.1 à 12.n) prédéfini par une unité de calcul (40) peut être reconnue au moyen du capteur d'identification de vis (50),
- il est possible de contrôler au moyen du capteur et de l'unité de calcul (40) si l'outil (20) ou le moyen de serrage de vis (30) est correctement appliqué sur le raccord vissé (12.1 à 12.n) et
- le moyen de serrage de vis (30) est déblocable au moyen de l'unité de calcul (40) si le résultat de ce contrôle est positif et/ou le moyen de serrage de vis (30) peut être bloqué ou arrêté si le résultat de ce contrôle est négatif ou n'est pas positif.

14. Outil (20) selon la revendication 13, dans lequel
- une utilisation du moyen de serrage de vis (30) est bloquée au moyen de l'unité de calcul (40) si la position de l'outil (20) au-dessus du raccord vissé (12.1 à 12.n) prédéfini par l'unité de calcul ne peut pas être reconnue au moyen du capteur d'identification de vis (50).

15. Outil (20) selon la revendication 13 ou 14, dans lequel
- un affichage de la position peut être délivré au moyen d'une unité de signalisation (22).

16. Outil (20) selon une ou plusieurs des revendications 13 à 15, dans lequel
- l'outil (20) peut être déplacé manuellement au moyen d'un train de roulement (26).

17. Outil (20) selon une ou plusieurs des revendications 13 à 16, dans lequel
- une séquence du serrage des raccords vissés (12.1 à 12.n) peut être prédéfinie au moyen de l'unité de calcul (40).

18. Outil (20) selon une ou plusieurs des revendications 13 à 17, dans lequel
- des paramètres du serrage peuvent être prédéfinis au moyen de l'unité de calcul (40).

19. Outil (20) selon une ou plusieurs des revendications 13 à 18, dans lequel
- des paramètres du serrage peuvent être documentés au moyen de l'unité de calcul (40).

20. Outil (20) selon une ou plusieurs des revendications 13 à 19, dans lequel
- l'outil (20) comporte une imprimante (51) pour apposer des moyens d'identification (14.1 à 14.n) et/ou des données de documentation sur une bride du raccordement à bride (10).

21. Utilisation d'un outil pouvant être déplacé manuellement (20) qui est configuré selon une ou plusieurs des revendications 13 à 20 dans un procédé selon une ou plusieurs des revendications 1 à 12 pour installer et/ou entretenir un raccordement à bride (10).
